# FASCICULE DE BREVET EUROPEEN

(11) **EP 1 891 293 B1**
(45) Date de publication et mention de la délivrance du brevet: **30.03.2016**
(21) Numéro de dépôt: 06755474.1
(22) Date de dépôt: 06.06.2006
(51) Int. Cl.: E06B 5/01, B64D 11/00, B64C 1/14, E06B 3/48

(54) **TRAPPE DE COMMUNICATION ET AERONEF MUNI D'UNE TELLE TRAPPE**
VERBINDUNGSKLAPPE UND MIT SOLCH EINER KLAPPE VERSEHENES FLUGZEUG
COMMUNICATION FLAP AND AIRCRAFT PROVIDED WITH ONE SUCH FLAP

(30) Priorité: 16.06.2005 FR 0551643
(43) Date de publication de la demande: 27.02.2008
(73) Titulaire: AIRBUS OPERATIONS (S.A.S), 31060 Toulouse (FR)
(72) Inventeur: GUERING, Bernard, F-31850 Montrabe (FR); GROH, Bernard, F-31780 Castelginest (FR); BERGERET, Christian, F-31650 Saint Orens de Gameville (FR)
(74) Mandataire: Gicquel, Olivier Yves Gérard
(86) Numéro de dépôt international: PCT/FR2006/001022
(87) Numéro de publication internationale: WO 2006/134242

(56) Documents cités:
- AU-B2- 559 741
- US-A- 3 601 341

## Description

L'invention concerne une trappe de communication apte à obturer ou à libérer un accès à une embrasure de porte ménagée dans une paroi, telle qu'un plancher, un plafond ou un mur. Plus précisément, l'invention concerne une trappe dont un système d'ouverture et de fermeture est tel qu'il est possible de disposer la trappe dans un endroit confiné ou encombré.

La trappe selon l'invention trouve notamment des applications dans le domaine de l'aéronautique, par exemple au niveau des postes de pilotage, comme trappe de communication entre un niveau supérieur, où sont situés les sièges des pilotes, et un niveau inférieur, où est située une zone de repos pour les pilotes. En effet, les postes de pilotage dans un aéronef sont généralement de taille réduite et encombrés, ce qui limite la place disponible au sol pour installer une trappe de communication. Une trappe dans le domaine de l'aéronautique est connue de US 3601341.

On connaît comme trappe de communication entre deux niveaux, ou plus généralement entre deux volumes, une trappe dont la porte est munie d'un unique battant monté en rotation sur la paroi séparant les deux volumes. Le battant a une amplitude de mouvement autour d'un axe de rotation parallèle à la paroi. Plus l'embrasure de la porte est importante, plus le rayon de débattement de la porte, et donc l'encombrement de la porte lorsqu'elle est au moins partiellement ouverte, est important. Aussi, il est indispensable de prévoir un espace dégagé suffisant autour de la trappe pour permettre le débattement de la porte. Une telle solution de l'état de la technique n'est donc pas adaptée pour des espaces réduits, confinés ou encombrés, dans lesquels la place disponible pour permettre le débattement de la porte ne peut être que limitée.

On connaît également dans l'état de la technique, une trappe dont la porte est munie de deux battants indépendants. Chaque battant est monté en rotation sur un rebord opposé de l'ouverture. Les deux battants peuvent s'ouvrir et se fermer indépendamment l'un de l'autre. Une telle solution permet de répartir de part et d'autre de l'embrasure de la porte la place nécessaire au débattement de ladite porte. L'amplitude de mouvement de chacun des deux battants d'une porte donnée est réduite par rapport à l'amplitude de mouvement de la même porte munie d'un seul battant. Cela permet l'ouverture et la fermeture d'une trappe dans des endroits ayant une surface dégagée réduite de part et d'autre de l'embrasure de la porte.

Cependant, pour une telle solution de porte à deux battants, il est nécessaire de ménager un espace libre de part et d'autre de la trappe, afin de permettre le débattement des deux battants. Ainsi, dans le cas où la trappe est ménagée à proximité d'un obstacle, il n'est pas possible d'utiliser cette solution dans la mesure où l'obstacle peut gêner le débattement d'un des deux battants.

On cherche à résoudre ces problèmes en proposant une trappe munie d'une porte dont un débattement est tel qu'elle peut être ouverte dans tous les cas, et notamment en présence d'un obstacle situé à proximité dé ladite trappe.

Pour cela, la trappe selon l'invention est munie d'une porte comportant au moins deux battants articulés l'un sur l'autre. Un seul des battants est relié à la paroi sur laquelle est ménagée l'ouverture. Le deuxième battant est uniquement relié au premier battant, et est articulé sur celui-ci. Ainsi, le premier battant est monté pivotant sur la paroi, tandis que le deuxième battant est monté pivotant sur le premier battant.

Lors d'une ouverture de la trappe, si la porte ne rencontre aucun obstacle, les deux battants s'étendent dans le même plan et sont ouverts et fermés simultanément, par rotation de la porte autour de l'axe de rotation reliant le premier battant à la paroi. Par contre, lorsqu'un obstacle est situé à proximité de la trappe, dans le rayon de débattement de la porte et plus précisément au niveau du deuxième battant de la porte, ledit deuxième battant, lorsqu'il arrive au contact de l'obstacle, fléchit par rapport au premier battant, de manière à passer l'obstacle. Chacun des deux battants a alors un débattement propre, respectivement par rapport à la paroi et par rapport au premier battant. Une fois que le deuxième battant n'est plus en contact avec l'obstacle, il bascule de manière à s'étendre à nouveau dans le plan du premier battant.

Dans le cas où la porte comporte plus de deux battants, le premier battant est relié à la paroi, chaque battant suivant étant relié au battant qui le précède. Ainsi, à l'exception du premier et du dernier battant, chaque battant est encadré par deux battants adjacents et est articulé sur ces deux battants.

Il est possible de réaliser la trappe de manière à pouvoir entrouvrir la trappe uniquement par l'intermédiaire du deuxième, ou dernier, battant, en maintenant le premier battant, ou l'ensemble des autres battants, fermé pour obturer partiellement l'embrasure de la porte. Par contre, l'ouverture du premier battant entraîne obligatoirement l'ouverture des battants suivants, soit simultanément, lorsque la porte ne rencontre aucun obstacle, soit de manière concomitante mais indépendante, lorsque au moins un des battants suivants rencontre un obstacle.

Le deuxième battant est par exemple monté pivotant sur le premier battant par l'intermédiaire d'une jonction flexible. Préférentiellement, une force de rappel de la jonction flexible est suffisante pour que les deux battants de la porte soient toujours maintenus en contact.

L'invention cherche à résoudre l'étanchéité entre les deux panneaux.

L'invention a pour objet une trappe de communication selon la revendication 1.

Par pivotant, on entend que le battant considéré peut basculer de part et d'autre de l'élément sur lequel il est monté. Par débattement d'un battant, on entend l'amplitude de mouvement dudit battant par rapport à sa position repos, correspondant à la position dans laquelle le battant est contenu dans le plan de la paroi. La paroi peut être un mur, un plancher, un plafond ou toute autre cloison de séparation entre deux volumes.

Selon des exemples de réalisations de la trappe de l'invention, il est possible de prévoir tout ou partie des caractéristiques supplémentaires suivantes :
- les deux battants sont reliés l'un à l'autre par un dispositif d'articulation comportant des moyens élastiques de rappel.
- le dispositif d'articulation est muni de deux cadres longs, chaque cadre long épousant au moins partiellement un bord d'un battant, de manière à ce que les deux cadres longs se fassent au moins partiellement face, les moyens élastiques de rappel étant fixés sur les cadres longs.

Par cadre long, on entend un châssis permettant d'encadrer au moins partiellement un bord d'un battant, c'est-à-dire sur tout ou partie de la longueur dudit bord. Les bords, ou côtés, des battants concernés sont les bords de jonction, c'est-à-dire les bords par lesquels les deux battants sont reliés.
- les moyens élastiques de rappel comportent au moins un tendeur élastique relié aux deux battants. Le tendeur est par exemple une courroie, ou lanière, élastique permettant de maintenir en tension les deux battants.
- les moyens élastiques de rappel comportent une pluralité de tendeurs élastiques, chaque tendeur élastique étant fixé par une première extrémité à un premier battant et par une deuxième extrémité au deuxième battant de manière à relier ponctuellement les deux battants l'un à l'autre.

Par ponctuellement, on entend en différents points, plus ou moins espacés les uns des autres, le long des bords de jonction des battants.
- le débattement du deuxième battant est indépendant du débattement du premier battant.

L'invention concerne également un aéronef muni d'au moins une telle trappe de l'invention. Par exemple, la trappe de communication est située derrière un siège apte à avoir au moins une position dans laquelle il forme une butée pour le deuxième battant.

L'invention sera mieux comprise à la lecture de la description qui suit et à l'examen des figures qui l'accompagnent. Celles-ci sont présentées à titre indicatif et nullement limitatif de l'invention. Les figures représentent :
- Figures 1A à 1D : une représentation schématique d'une trappe selon l'invention en position fermée (figure 1A) et dans différentes positions ouvertes (figures 1B, 1C et 1D) ;
- Figures 2A et 2B : une représentation d'une trappe selon l'invention, la porte de la trappe rencontrant un obstacle lors de l'ouverture ;
- Figures 3A et 3B : une représentation schématique d'une trappe selon l'invention, la porte de la trappe rencontrant un obstacle lors de la fermeture ;
- Figures 4A à 4C : un agrandissement de la trappe selon l'invention à l'endroit de la jonction entre le premier et le deuxième battant ;
- Figure 5 : une représentation d'un cockpit d'aéronef muni d'une trappe selon l'invention;
- Figure 6 : une autre représentation d'un cockpit d'aéronef muni d'une trappe selon l'invention.

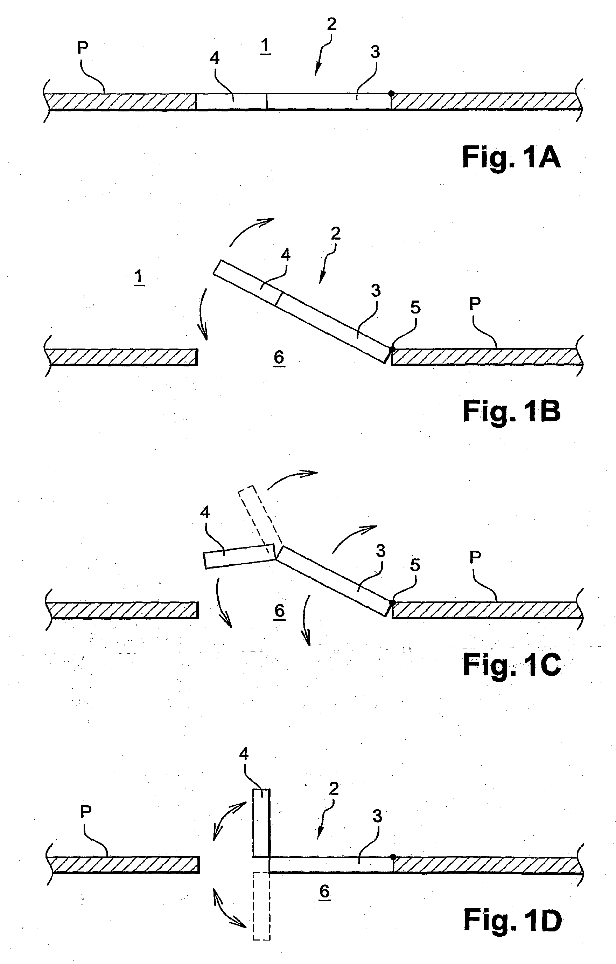

Sur la figure 1A, est représentée une trappe 1 sur un plancher P. La trappe 1 est munie d'une porte 2, formée de deux battants 3, 4, obturant une ouverture ménagée sur le plancher P. La porte 2 est fermée de sorte que les battants 3, 4 s'étendent dans le plan du plancher P.

Sur la figure 1B, la porte 2 est ouverte. Le premier battant 3 est fixé au plancher P par une charnière 5 montée en rotation sur le plancher P. Le deuxième battant 4 s'étend dans le plan du premier battant 3 de sorte que la porte 2 semble être une porte à un seul battant. L'ouverture de la porte 2 permet de dégager un accès à l'ouverture 6 ménagée dans le plancher P. L'amplitude de débattement de la porte 2 est par exemple de 180° autour de l'axe de rotation, de sorte que la porte 2 peut avoir deux positions extrêmes opposées, respectivement position repos dans laquelle elle obture l'ouverture 6 et position active dans laquelle elle libère complètement l'accès à l'ouverture 6 et se superpose au plancher P. Il est également possible de réaliser une porte 2 dont l'amplitude de débattement est inférieure à 180°, par exemple environ égal à 90°.

Sur la figure 1C sont représentés différents débattements possibles de chacun des deux battants 3 et 4 de la porte 2. Le premier battant 3 peut avoir un mouvement de bascule autour de l'axe de rotation passant par la charnière 5. Le deuxième battant 4, monté en rotation sur le premier battant 3, a quant à lui un débattement pouvant être indépendant du débattement du premier battant 3. Ainsi, le deuxième battant 4 peut pivoter autour d'un axe de rotation passant par la liaison entre le premier battant 3 et le deuxième battant 4, de manière à basculer de part et d'autre du premier battant 3.

La position du deuxième battant 4 par rapport au premier battant 3 dépend des obstacles éventuels que le deuxième battant 4 rencontre lors de l'ouverture et/ou la fermeture de la porte 2. Dans un exemple de réalisation particulier, lorsqu'il n'existe aucun obstacle gênant l'ouverture de la porte 2 au niveau du deuxième battant 4, ledit deuxième battant 4 s'étend dans le plan du premier battant 3.

Sur la figure 1D est représenté un autre exemple d'ouverture de la porte 2 selon l'invention. Le premier battant 3 est en position repos, c'est-à-dire qu'il s'étend dans le plan du plancher P de manière à obturer l'ouverture 6. Le deuxième battant 4 est ouvert, et s'étend dans un plan perpendiculaire au plan du plancher P. Ainsi, il est possible de n'ouvrir que partiellement la porte 2. Comme cela sera exposé plus en détails dans la suite de la description, une telle ouverture partielle de la porte 2 peut s'avérer particulièrement avantageuse dans un aéronef, notamment pour compenser des différences de pression entre deux niveaux volumes.

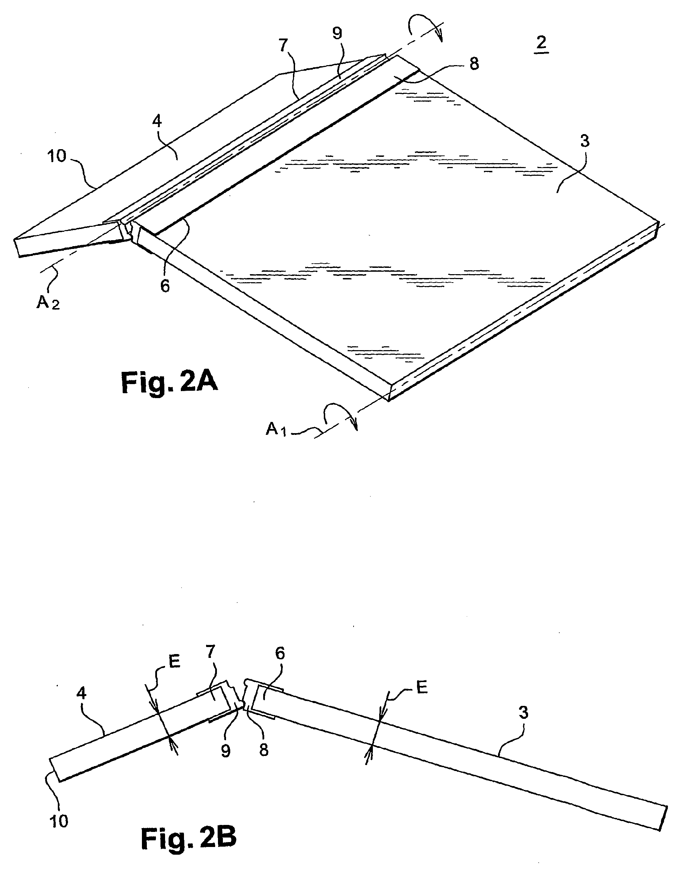

Sur les figures 2A et 2B, on peut voir la porte 2 selon l'invention en phase d'ouverture lorsqu'un obstacle (non représenté) gêne l'ouverture au niveau du deuxième battant 4 de la porte 2.

Le premier battant 3 s'élève par rapport au plancher par rotation autour d'un premier axe de rotation A1 passant par la charnière (non représentée) reliant le premier battant 3 au plancher.

Le deuxième battant 4 s'étend dans un plan différent du plan contenant le premier battant 3. Un bord 7 du deuxième battant 4, en contact avec un bord 6 du premier battant 3, est situé au-dessus du bord 10 du deuxième battant 4 formant l'extrémité libre de la porte 2. Par extrémité libre 10 de la porte 2, on entend l'extrémité de la porte 2 opposée à l'extrémité montée en rotation sur le plancher. L'extrémité libre 10 de la porte 2 est par exemple en contact avec un obstacle (non représenté) imposant un pivotement du deuxième battant 4 pour entraîner ledit deuxième battant 4 vers le bas par rapport au plancher. Le deuxième battant 4 pivote autour d'un axe de rotation A2 s'étendant le long de la jonction entre les deux battants 3, 4.

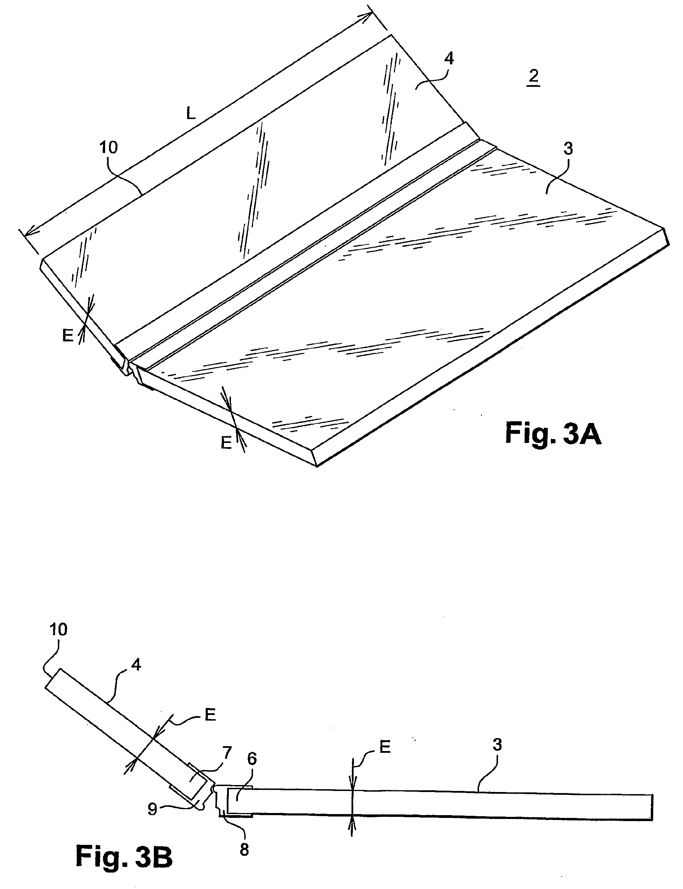

Sur l'exemple représenté aux figures 3A et 3B, la porte 2 rencontre un obstacle au moment de sa fermeture. Le premier battant 3 est en position repos, c'est-à-dire dans une position dans laquelle elle obture l'ouverture 6 ménagée sur le plancher P, tandis que le deuxième battant 4 fait saillie par rapport au premier battant 3.

Sur les figures 2A, 2B, 3A et 3B, on peut voir un exemple de réalisation de la jonction entre le premier 3 et le deuxième battant 4 de la porte 2.

Chaque battant 3, 4 est muni d'un cadre long, respectivement 8 et 9. Chaque cadre long 8, 9 s'étend dans la longueur des bords de jonction 6, 7 des battants 3, 4. Les bords de jonction 6, 7 se font face de sorte que les cadres longs 8, 9 se font également face.

Dans l'exemple représenté aux figures 2A, 2B, 3A, 3B, les cadres longs 8 et 9 s'étendent sur toute une longueur L des bords de jonction 6 et 7. Par longueur L, on entend la dimension des bords de jonction 6 et 7 parallèlement à l'axe de rotation A2. Dans un autre exemple de réalisation, il est possible de prévoir que les cadres longs 8, 9 n'encadrent que partiellement les bords de jonction 6, 7 des battants 3, 4.

La coupe transversale des cadres longs 8, 9 a par exemple une forme générale en U, la cavité 17 ménagée entre les branches du U étant telle qu'elle peut encadrer une épaisseur E des battants 3, 4. Par épaisseur E des battants 3, 4, on entend la dimension desdits battants 3, 4 perpendiculairement à l'axe de rotation A2. Les cadres longs 8, 9 sont par exemple maintenus sur les battants 3, 4 par un contact serré, ou par des vis, de la colle ou tout autre moyen de fixation.

Les cadres longs 8, 9 appartiennent à un dispositif d'articulation 11 permettant la rotation du deuxième battant 4 par rapport au premier battant 3.

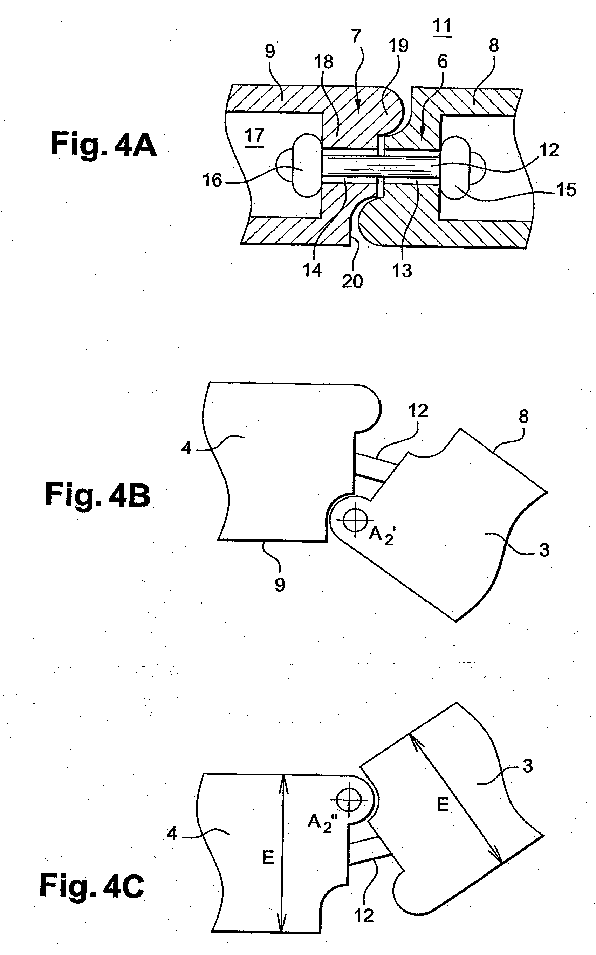

Sur les figures 4A, 4B et 4C, on peut voir plus en détail un exemple de réalisation du dispositif d'articulation 11 permettant de relier le deuxième battant 4 au premier battant 3.

Le dispositif d'articulation 11 comporte les deux cadres longs 8, 9 ainsi qu'au moins un tendeur élastique 12. Les cadres longs 8, 9 sont chacun munis d'un orifice 13, 14 traversé par le tendeur élastique 12. Chaque extrémité 15, 16 du tendeur élastique 12 est en butée contre la paroi bordant un orifice 13, 14, de manière à ce que ledit tendeur élastique 12 soit maintenu sur les deux cadres longs 8, 9. Ainsi, le tendeur élastique 12 permet de maintenir en tension les deux cadres longs 8, 9 et donc les deux battants de la porte.

Selon un exemple de réalisation de l'invention, il est possible de munir le dispositif d'articulation 11 de plusieurs tendeurs élastiques 12 disposés dans la longueur des battants 3 et 4, chaque tendeur élastique 12 traversant les deux cadres longs 8, 9. La jonction entre les deux battants 3 et 4 est alors une jonction ponctuelle, au niveau de chaque tendeur élastique 12.

Dans un autre exemple de réalisation de l'invention, il est également possible de prévoir un unique tendeur élastique 12 d'une longueur suffisante pour pouvoir traverser plusieurs fois, chacun des deux cadres longs 8, 9, en serpentant entre les deux cadres longs 8 et 9. Par longueur du tendeur élastique 12, on entend la dimension dudit tendeur 12 entre ses deux extrémités 15, 16. Une telle solution est particulièrement avantageuse pour régler ou réajuster aisément la tension du tendeur élastique 12 et donc la force de rappel entre les deux battants 3, 4. En effet, il suffit de défaire le tendeur élastique 12 au niveau d'une de ses extrémités 15, 16, et de tirer sur ladite extrémité 15, 16 de manière à tendre le tendeur élastique 12 et obtenir la tension souhaitée.

Il est également possible d'avoir un unique tendeur élastique 12, dont une largeur correspond sensiblement à la longueur des cadres longs 8 et 9. Par largeur du tendeur élastique 12, on entend la dimension dudit tendeur 12 perpendiculairement à la longueur du tendeur élastique 12. Par exemple, le tendeur élastique 12 est muni de deux glissières, formant les extrémités 15, 16 du tendeur élastique 12 et situées dans chaque cavité 17 des cadres longs 8, 9, et d'une partie intermédiaire traversant les orifices 13, 14 des cadres longs 8, 9.

Chaque cadre long 8, 9 comporte, au niveau du bord de jonction 6, 7, une protubérance 19 et un renfoncement 20, ou excavation. La protubérance 19 et le renfoncement 20 s'étendent sur toute la longueur des bords de jonction 6, 7. Les cadres longs 8, 9 sont disposés l'un part rapport à l'autre de manière à ce que la protubérance 19 du premier cadre long 8 coïncide avec le renfoncement 20 du deuxième cadre long 9. De même, la protubérance 19 du deuxième cadre long 9 coïncide avec le renfoncement 20 du premier cadre long 8. La protubérance 19 du premier cadre long 8 est complémentaire du renfoncement 20 du deuxième cadre long 9, et inversement. Par complémentaire, on entend qu'un contour d'un renfoncement 20 épouse un contour de la protubérance 19 située en vis à vis.

Le mouvement de bascule du deuxième cadre long 9 par rapport au premier cadre long 8, correspondant au mouvement de bascule du deuxième battant 4 par rapport au premier battant 3, peut se faire autour de deux axes de rotation A2', A2" différents, selon la direction du débattement.

Sur la figure 4B, le pivotement du deuxième battant 4, vers le haut par rapport au premier battant 3, se fait autour d'un axe de rotation A2' passant par la protubérance 19 ménagée sur le premier cadre long 8. A l'inverse, comme cela est représenté sur la figure 4C, le pivotement du deuxième battant 4, vers le bas par rapport au premier battant 3, se fait autour d'un deuxième axe de rotation A2" passant par la protubérance 19 ménagée sur le deuxième cadre long 9.

Avantageusement et afin de garantir un bras de levier le plus grand possible, les axes de rotation A2' et A2" sont éloignés au maximum l'un de l'autre, c'est-à-dire que chaque axe de rotation A2' et A2" est situé à une extrémité opposée de l'épaisseur E du battant 3, 4 considéré.

Avantageusement, la force de rappel du tendeur élastique 12 est telle que les battants 3 et 4 sont en contact permanent, sur toute l'épaisseur E desdits battants 3, 4 (figure 4A) ou uniquement à l'endroit d'une protubérance 19 et d'un renfoncement 20 associé (Figures 4B et 4C).

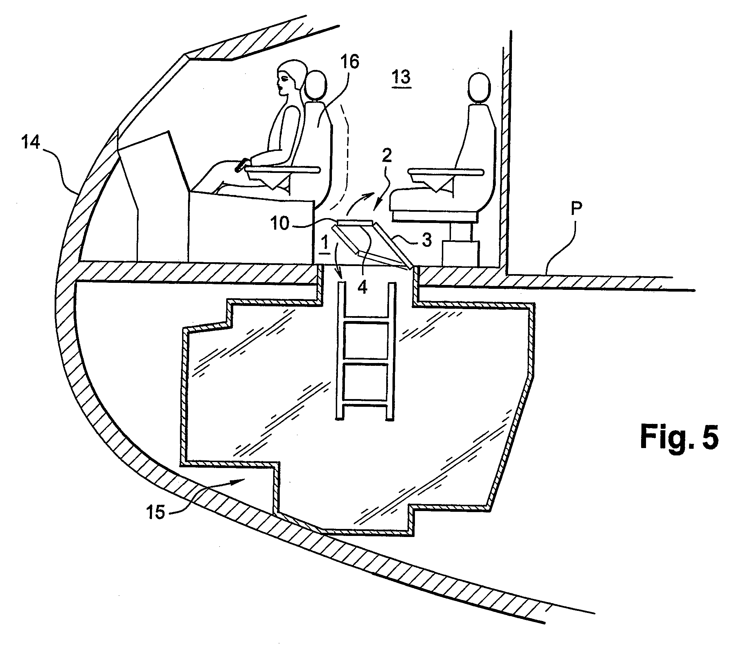

Sur la figure 5 est représenté un exemple d'utilisation de la trappe 1 selon l'invention dans un aéronef 14.

La trappe 1 est située dans un cockpit 13 de l'aéronef 14. Un cockpit est généralement un espace exigu et encombré, dans lequel il est difficile de libérer une surface au sol suffisante pour permettre l'ouverture d'une trappe. Cependant, dans certains aéronefs, il est nécessaire de ménager une trappe 1 permettant une communication entre le niveau de pilotage et le niveau inférieur, situé sous le plancher P de l'aéronef 14, afin de pouvoir accéder à une salle inférieure 15 servant notamment pour le repos des pilotes.

La trappe 1 est généralement disposée derrière le siège 16 du pilote. Le siège 16 du pilote peut avoir deux positions extrêmes différentes. Dans la première position extrême, telle qu'elle est représentée à la figure 5, le siège 16 est avancé de manière à ce que le pilote puisse accéder aux manettes situées devant lui. Dans une deuxième position extrême, représentée en pointillés sur la figure 5, le siège 16 est légèrement reculé par rapport à sa position de pilotage. Dans cette deuxième position extrême le fauteuil 16 peut gêner une ouverture ou une fermeture de la porte 2 de la trappe 1.

En utilisant la trappe 1 selon l'invention, la porte 2 peut être ouverte et fermée quelle que soit la position du siège pilote 16. Pour cela, l'extrémité libre 10 de la porte 2 est dirigée vers le siège 16, le débattement de la porte 2 se faisant vers l'arrière du siège 16.

Lorsque le siège 16 est dans la position de pilotage, c'est-à-dire dans la première position extrême, il ne forme pas un obstacle à l'ouverture et/ou à la fermeture de la porte 2. Les deux battants 3, 4 s'étendent alors dans un même plan à tous les stades de l'ouverture et de la fermeture de la porte 2.

Lorsque le siège 16 est reculé dans la deuxième position extrême, il forme un obstacle à l'ouverture et la fermeture de la porte 2. Le siège 16 impose alors au deuxième battant 4 un fléchissement par rapport au premier battant 3, afin que la porte 2 puisse franchir l'obstacle.

Par ailleurs, il peut être particulièrement avantageux de munir un aéronef 14 d'au moins une trappe 1 selon l'invention, afin de diminuer les risques de dépressurisation.

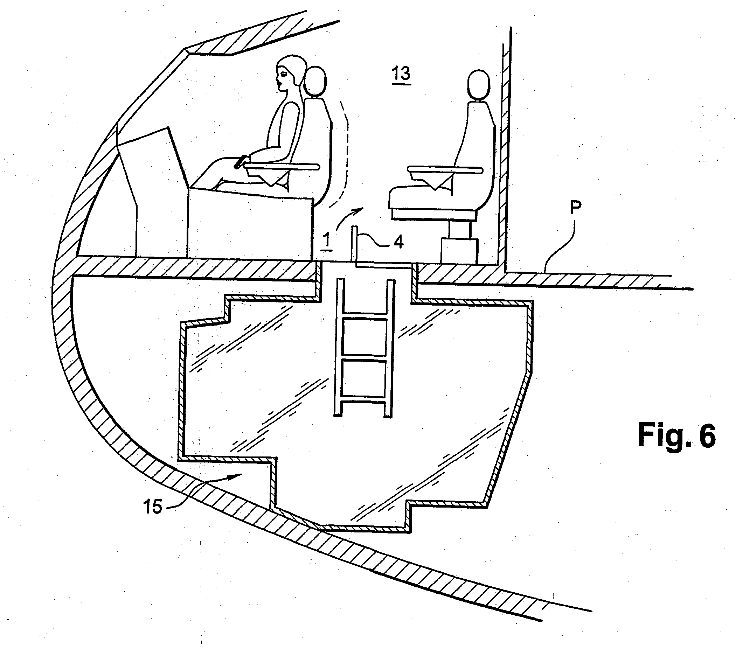

En effet, le deuxième battant 4 de la porte 2 peut s'ouvrir et se fermer indépendamment du premier battant 3, comme cela est représenté sur la figure 6. Lorsque, par exemple, le cockpit 13 subit une dépressurisation, la différence de pression entre le cockpit 13 et la salle de repos 15 permet une ouverture automatique du deuxième battant 4. L'ouverture 6 ménagée dans le plancher P étant partiellement libérée, un équilibre des pressions a lieu entre le cockpit 13 et la cabine de repos 15.

Dans l'ensemble des exemples représentés aux figures 1 à 6, la trappe 1 de communication est présentée comme une trappe 1 ménagée sur un plancher P. Bien entendu, il est possible que la trappe 1 de communication soit ménagée sur un mur, c'est-à-dire une paroi verticale, ou sur toute sorte de cloison verticale ou horizontale.

## Revendications

1. Trappe (1) de communication comportant une porte (2) destinée à obturer ou libérer un accès à une ouverture (6) sur une paroi (P), la porte comportant au moins deux battants (3, 4), un premier battant (3) étant monté pivotant sur la paroi, de manière à pouvoir ouvrir et fermer la porte, un deuxième battant (4) étant monté pivotant sur le premier battant de manière à avoir un débattement autour dudit premier battant, les deux battants étant reliés l'un à l'autre par un dispositif d'articulation (11) comportant des moyens élastiques de rappel (12) aptes à ramener le deuxième battant dans le prolongement du premier battant, le dispositif d'articulation étant muni de deux cadres longs (8, 9), chaque cadre long épousant au moins partiellement un bord (6, 7) d'un battant de manière à ce que les deux cadres longs se fassent au moins partiellement face, les moyens élastiques de rappel étant fixés sur les cadres longs, **caractérisé en ce que**
- chaque cadre long comporte, au niveau de leur bord de jonction (6,7), une protubérance (19) et un renfoncement (20), ladite protubérance et ledit renfoncement s'étendant sur toute la longueur des bords de jonction, les cadres longs étant disposés l'un par rapport à l'autre de manière à ce que la protubérance du premier cadre long est complémentaire du renfoncement du deuxième cadre long et que le renfoncement du premier cadre long est complémentaire de la protubérance du deuxième cadre long.

2. Trappe selon la revendication 1, **caractérisée en ce que** les moyens élastiques de rappel comportent au moins un tendeur élastique relié aux deux battants

3. Trappe selon l'une des revendications 1 à 2, **caractérisée en ce que** les moyens élastiques de rappel comportent une pluralité de tendeurs élastiques, chaque tendeur élastique étant fixé par une première extrémité (15) au premier battant (3) et par une deuxième extrémité (16) au deuxième battant (4) de manière à relier ponctuellement les deux battants l'un à l'autre.

4. Trappe selon l'une des revendications 1 à 3, **caractérisée en ce que** le débattement du deuxième battant est indépendant du débattement du premier battant.

5. Aéronef (14) comportant au moins deux niveaux (13, 15) **caractérisé en ce qu'**il comporte au moins une trappe (1) de communication selon l'une des revendications 1 à 4 entre les deux niveaux.

6. Aéronef selon la revendication 5, **caractérisé en ce que** la trappe de communication est située derrière un siège (16) apte à avoir au moins une position dans laquelle ledit siège forme une butée pour le deuxième battant de la trappe.

## Patentansprüche

1. Kommunikationsklappe (1), umfassend eine Tür (2), die dazu bestimmt ist, einen Zugang zu einer Öffnung (6) an einer Wand (P) zu verschließen oder freizugeben, wobei die Tür mindestens zwei Flügel (3, 4) umfasst, wobei ein erster Flügel (3) schwenkend an der Wand montiert ist, so dass die Tür geöffnet und geschlossen werden kann, und ein zweiter Flügel (4) schwenkend am ersten Flügel montiert ist, um einen Bewegungsspielraum um den ersten Flügel zu haben, wobei die beiden Flügel über eine Gelenkvorrichtung (11) miteinander verbunden sind, die elastische Rückholmittel (12) umfasst, die geeignet sind, den zweiten Flügel in die Verlängerung des ersten Flügels zurückzuholen, wobei die Gelenkvorrichtung mit zwei langen Rahmen (8, 9) versehen ist, wobei sich jeder Rahmen mindestens teilweise an einen Rand (6, 7) eines Flügels anpasst, so dass sich die beiden langen Rahmen mindestens teilweise gegenüberliegen, wobei die elastischen Rückholmittel an den langen Rahmen befestigt sind, **dadurch gekennzeichnet, dass**
- jeder lange Rahmen auf der Höhe seiner Stoßkante (6, 7) einen Vorsprung (19) und eine Vertiefung (20) umfasst, wobei sich der Vorsprung und die Vertiefung über die gesamte Länge der Stoßkanten erstrecken, wobei die langen Rahmen so bezüglich einander angeordnet sind, dass der Vorsprung des ersten langen Rahmens zu der Vertiefung des zweiten langen Rahmens komplementär ist und dass die Vertiefung des ersten langen Rahmens zu dem Vorsprung des zweiten langen Rahmens komplementär ist.

2. Klappe nach Anspruch 1, **dadurch gekennzeichnet, dass** die elastischen Rückholmittel mindestens eine mit den beiden Flügeln verbundene elastische Spannvorrichtung umfassen.

3. Klappe nach einem der Ansprüche 1 bis 2, **dadurch gekennzeichnet, dass** die elastischen Rückholmittel eine Vielzahl von elastischen Spannvorrichtungen umfassen, wobei jede elastische Spannvorrichtung durch ein erstes Ende (15) am ersten Flügel (3) und durch ein zweites Ende (16) am zweiten Flügel (4) befestigt ist, um die beiden Flügel punktuell miteinander zu verbinden.

4. Klappe nach einem der Ansprüche 1 bis 3, **dadurch gekennzeichnet, dass** der Bewegungsspielraum des zweiten Flügels vom Bewegungsspielraum des ersten Flügels unabhängig ist.

5. Fluggerät (14), umfassend mindestens zwei Etagen (13, 15), **dadurch gekennzeichnet, dass** es mindestens eine Kommunikationsklappe (1) nach einem der Ansprüche 1 bis 4 zwischen den beiden Etagen umfasst.

6. Fluggerät nach Anspruch 5, **dadurch gekennzeichnet, dass** die Kommunikationsklappe hinter einem Sitz (16) angeordnet ist, der geeignet ist, mindestens eine Position zu haben, in der der Sitz einen Anschlag für den zweiten Flügel der Klappe bildet.

## Claims

1. Communication hatch (1) having a door (2) intended to close or free access to an opening (6) in a partition (P), the door having at least two leaves (3, 4), a first leaf (3) being mounted pivotably on the partition, in such a way that the door can be opened and closed, a second leaf (4) being mounted pivotably on the first leaf so as to provide travel around said first leaf, the two leaves being connected to each other by a hinge device (11) having resilient return means (12) for bringing the second leaf back into the extension of the first leaf, the hinge device being provided with two long frames (8, 9), each long frame conforming in shape at least partially to one edge (6, 7) of a leaf, in such a way that the two long frames face each other at least partially, the resilient return means being fixed to the long frames, **characterized in that**
- each long frame has, on its junction edge (6, 7), a protuberance (19) and an indentation (20), said protuberance and said indentation extending along the whole length of the junction edges, the long frames being positioned with respect to each other in such a way that the protuberance of the first long frame is complementary to the indentation of the second long frame and the indentation of the first long frame is complementary to the protuberance of the second long frame.

2. Hatch according to Claim 1, **characterized in that** the resilient return means include at least one resilient tensioner connected to the two leaves.

3. Hatch according to either of Claims 1 and 2, **characterized in that** the resilient return means include a plurality of resilient tensioners, each resilient tensioner being fixed by a first end (15) to the first leaf (3) and by a second end (16) to the second leaf (4) so as to connect the two leaves to each other at separate points.

4. Hatch according to any one of Claims 1 to 3, **characterized in that** the travel of the second leaf is independent of the travel of the first leaf.

5. Aircraft (14) having at least two levels (13, 15), **characterized in that** it has at least one communication hatch (1) according to any one of Claims 1 to 4 between the two levels.

6. Aircraft according to Claim 5, **characterized in that** the communication hatch is located behind a seat (16) adapted to have at least one position in which said seat forms a stop for the second leaf of the hatch.
